# EUROPÄISCHE PATENTANMELDUNG

(11) **EP 2 662 164 A2**
(43) Veröffentlichungstag der Anmeldung: **13.11.2013**
(21) Anmeldenummer: 13167152.1
(22) Anmeldetag: 08.05.2013
(51) Int. Cl.: B22D 19/00, B22D 19/04, E03C 1/04, F16K 11/00

(54) **Druckgussbauteil sowie Verfahren zur Herstellung eines Druckgussbauteils**

(30) Priorität: 10.05.2012 EP 12167501; 17.11.2012 WO PCT/EP2012/072938; 17.11.2012 WO PCT/EP2012/072939
(71) Anmelder: HDO -Druckguss- und Oberflächentechnik GmbH, 33106 Paderborn (DE)
(72) Erfinder: Gossing, Alexander, 33098 Paderborn (DE); Lauterbach, Arno, 33181 Bad Wünnenberg (DE); Kießler, Peter, 33178 Borchen (DE); Öffler, Andreas, 59597 Erwitte (DE); Stümpel, Josef, 33178 Borchen (DE); Franke, Ulrich, 33106 Paderborn (DE); Herberhold, Dr. Heinz, 59555 Lippstadt (DE); Stollburges, Dieter, 33178 Borchen (DE)
(74) Vertreter: Albrecht, Ralf

(57) **Zusammenfassung**

Die vorliegende Erfindung betrifft ein Druckgussbauteil, insbesondere Wasserauslaufarmatur, umfassend einen im Druckgießverfahren aus Metall oder einer Metalllegierung hergestellten Grundkörper (1) mit einem Hohlraum, in dem mehrere Öffnungen (2, 3, 4) vorgesehen sind, durch welche der Hohlraum von außen zugänglich ist, wobei der Hohlraum zumindest teilweise mit einem Gießkern (5) gefüllt ist, der mit der Innenseite des Grundkörpers (1) in flächigem Kontakt steht und in dem wenigstens ein Kanal (6) zur Fluidführung vorgesehen ist, wobei in einem überwiegenden Teil der Kontaktfläche, insbesondere in dem gesamten oder nahezu dem gesamten Kontaktflächenbereich zwischen dem Gießkern (5) und dem Grundkörper (1) die Wandstärke des Gießkerns (5) gleich groß oder größer ist als die Wandstärke des Grundkörpers (1). Des Weiteren betrifft die Erfindung ein Verfahren zur Herstellung eines solchen Druckgussbauteils.

## Beschreibung

Die Erfindung betrifft ein Druckgussbauteil, insbesondere Wasserauslaufarmatur, umfassend einen im Druckgießverfahren aus Metall oder einer Metalllegierung hergestellten Grundkörper mit einem Hohlraum, in dem mehrere Öffnungen vorgesehen sind, durch welche der Hohlraum von außen zugänglich ist, wobei der Hohlraum zumindest teilweise mit einem Gießkern gefüllt ist, der mit der Innenseite des Grundkörpers in flächigem Kontakt steht und in dem wenigstens ein Kanal zur Fluidführung vorgesehen ist.

Des Weiteren betrifft die Erfindung ein Verfahren zur Herstellung eines Druckgussbauteils, insbesondere einer Wasserauslaufarmatur, umfassend einen Grundkörper mit einem Hohlraum, wobei in dem Grundkörper mehrere Öffnungen vorgesehen sind, durch welche der Hohlraum von außen zugänglich ist, mit den Schritten:
- ein Druckgießwerkzeug mit einem darin gehaltenen Gießkern wird bereitgestellt,
- der Grundkörper wird durch Druckgießen hergestellt, und
- das Druckgießwerkzeug wird von dem Grundkörper entfernt,
wobei der Gießkern in dem Grundkörper verbleibt und in dem Gießkern wenigstens ein Kanal zur Fluidführung vorgesehen wird.

Derartige Gussbauteile und Verfahren zu deren Herstellung sind in verschiedenen Ausgestaltungen aus dem Stand der Technik bekannt. Die DE 10 2009 024 791 A1 beispielsweise offenbart eine Vorrichtung und ein Verfahren zur Herstellung eines Druckgussbauteils, bei dem ein als Form dienendes Druckgießwerkzeug sowie ein verlorener Gießkern zum Einsatz kommen. Der verlorene Gießkern ermöglicht es dabei, ein Druckgussbauteil mit einem Hohlraum zu erhalten. Dazu wird in an sich bekannter Weise flüssiges Material, insbesondere erhitztes Metall unter hohem Druck in das Druckgießwerkzeug eingedrückt. Das Material füllt den durch das Druckgießwerkzeug definierten Raum aus, wobei der Bereich, über den sich der verlorene Gießkern erstreckt, frei bleibt. Nach einer vorgegebenen Zeitspanne, in welcher das Material abkühlt, wird das Druckgießwerkzeug von dem Druckgussbauteil entfernt. Anschließend wird der verlorene Gießkern, beispielsweise thermisch, katalytisch und/oder durch Auflösen aus dem Druckgussbauteil herausgelöst. Das erhaltene Druckgussbauteil kann dann weiterverarbeitet bzw. unmittelbar seiner Verwendung zugeführt werden.

Die Fertigung von Bauteilen im Gießverfahren hat sich auch für fluidführende Bauteile, also Bauteile, die mit fluidführenden Leitungen versehen werden, als geeignet erwiesen. Dabei kann es sich beispielsweise um Sanitär-Bauteile, insbesondere Wasserauslaufarmaturen, handeln.

Zur Herstellung eines derartigen Bauteils wird in der oben beschriebenen Weise zunächst ein im Wesentlichen hohler Grundkörper aus Metall - beispielsweise das Gehäuse einer Wasserauslaufarmatur - hergestellt. Anschließend werden in dem Innenraum des Grundkörpers weitere Teile wie etwa Leitungen und Durchflussregelungsvorrichtungen montiert. Neben einfachen Ventilen kommen auch Mischkartuschen zum Einsatz, durch welche nicht nur ein Öffnen und Verschließen der Leitungen, sondern auch ein Mischen von Fluiden, insbesondere unterschiedlicher Temperatur, möglich ist. Die Installation von weiteren Bauteilen an bzw. in einer im Gießverfahren hergestellten Wasserauslaufarmatur wird teilweise jedoch als nachteilig empfunden, da diese mit einem hohen Zeitaufwand und hohen Fertigungskosten verbunden ist.

Um dieser Problematik zu begegnen, wird in der US 2003/0062088 A1 vorgeschlagen, in den Gießkern, der in üblicherweise aus Formsand besteht, eine Leitung einzuarbeiten. Diese Leitung verbleibt nach dem Gießvorgang in dem Armaturengehäuse, während der Formsand entfernt wird.

In der US 5,579,823 A ist ferner ein Verfahren zum Gießen einer Wasserauslaufarmatur beschrieben, bei dem ein sogenannter Permanentkern als Gießkern zum Einsatz kommt, der nach dem Fertigungsprozess in dem Bauteil verbleibt und der Bereitstellung einer Wasserführung in der Armatur dient. Der Permanentkern ist dabei aus mehreren entsprechend geformten Teilen zusammengesetzt, die aus einem Material bestehen sollen, dessen Schmelzpunkt oberhalb des Schmelzpunktes des Materials liegt, aus welchem das Armaturengehäuse gegossen wird.

Schließlich ist aus der EP 2 033 721 A1 ein Verfahren zur Herstellung von Gehäusen für Sanitärarmaturen bekannt. Bei diesem wird zunächst ein vorgeformtes Hohlprofil, welches aus mehreren Elementen besteht und ein Leitungssystem bildet, bereitgestellt und mit einem Umhüllungsmaterial versehen, um einen Gießkern für den Gießvorgang zu erhalten. Insbesondere wird vorgeschlagen, Formsand als Umhüllungsmaterial zu verwenden, der nach dem Gießvorgang über den Anschluss für Kaltwasser wieder entfernt werden kann.

Ausgehend von diesem Stand der Technik ist es eine Aufgabe der vorliegenden Erfindung, ein fluidführendes Gussbauteil der eingangs genannten Art zu schaffen, welches auf einfachem Wege und kostengünstig hergestellt werden kann, wobei es sich durch eine hohe Qualität und Zuverlässigkeit auszeichnet. Darüber hinaus ist es eine Aufgabe der vorliegenden Erfindungen, ein Verfahren zur Herstellung eines derartigen Gussbauteils anzugeben.

Diese Aufgabe wird bei einem Druckgussbauteil der eingangs genannten Art dadurch gelöst, dass in einem überwiegenden Teil - d.h. in wenigstens 60% oder 70% - der Kontaktfläche, insbesondere in nahezu dem gesamt Kontaktflächenbereich, d.h. in wenigstens 80% oder 90% der Kontaktfläche, und bevorzugt dem gesamten Kontaktflächenbereich zwischen dem Gießkern und dem Grundkörper die Wandstärke des Gießkerns gleich groß oder größer ist als die Wandstärke des Grundkörpers.

Darüber hinaus wird die Aufgabe bei einem Verfahren der eingangs genannten Art dadurch gelöst, dass ein Gießkern verwendet wird, welcher derart ausgebildet ist, dass in einem überwiegenden Teil - d.h. in wenigstens 60% oder 70% - der Kontaktfläche, insbesondere in nahezu dem gesamt Kontaktflächenbereich, d.h. in wenigstens 80% oder 90% der Kontaktfläche, und bevorzugt dem gesamten Kontaktflächenbereich zwischen dem Gießkern und dem Grundkörper die Wandstärke des Gießkerns gleich groß oder größer ist als die Wandstärke des Grundkörpers.

Dabei kann die Wandstärke des Gießkerns so bemessen sein, dass sie wenigstens 1,3-mal, insbesondere wenigstens 1,5-mal so groß ist wie die Wandstärke des Grundkörpers.

Der Erfindung liegt somit die an sich bekannte Idee zugrunde, bei einem fluidführenden Bauteil, welches im Druckgießverfahren hergestellt wurde, den Gießkern, der normalerweise nach dem Gießvorgang entfernt wird, in dem hergestellten Grundkörper vollständig zu belassen und diesen gezielt für die Fluidführung, also die Führung beliebiger Fluide, insbesondere Flüssigkeiten, Dampf oder Gas, zu nutzen. Dafür ist in dem für das Gießen erforderlichen Gießkern wenigstens ein Kanal zur Fluidführung vorgesehen. Hierdurch wird ermöglicht, das erfindungsgemäße Gussbauteil unmittelbar nach dem Abschluss des Gießvorganges einer Verwendung, beispielsweise an einem Waschbecken oder einer Badewanne zuzuführen. Es müssen keine - als separate Bauteile ausgebildete - Leitungen in dem Grundkörper des Gussbauteils vorgesehen werden, da der erfindungsgemäß ausgebildete Gießkern die Funktion der Leitungen übernimmt. Hierdurch wird verhindert, dass der Grundkörper des Gussbauteils, der in der Regel aus einem Metall gefertigt ist, in Kontakt mit dem Fluid kommt. Der Grundkörper wird somit durch den Gießkern automatisch vor Korrosion geschützt, ohne dass zusätzliche, Kosten verursachende, Maßnahmen wie etwa eine Kunststoff-Versiegelung der Grundkörper-Innenseite erforderlich wären. Prinzipiell kann das erfindungsgemäße Gussbauteil als beliebiges fluidführendes, insbesondere wasserführendes Bauteil ausgebildet sein. Es kann beispielsweise eine Armatur, insbesondere eine Wasserauslaufarmatur, oder auch ein Ventil sein.

Da es sich um den Gießkern handelt, der für den Gießvorgang verwendet wurde, füllt dieser den Grundkörper zumindest in denjenigen Abschnitten, für deren Formgebung er verantwortlich ist, vollständig aus, so dass seine Außenfläche in diesen Abschnitten in vollflächigen Kontakt mit der Innenseite des hergestellten Grundkörpers steht. Der Gießkern wird dadurch automatisch in dem Grundkörper gehalten, ohne dass zusätzlich Befestigungsmittel vorgesehen werden müssten, durch welche zusätzlicher Aufwand und Kosten entstehen würden.

Das erfindungsgemäße Gussbauteil kann auf einfachem Wege erhalten und nach einer vergleichsweise kurzen Produktionszeit seiner Verwendung zugeführt werden. Dabei zeichnet sich der in dem Gießkern vorgesehene Kanal durch eine hohe Dichtigkeit aus. Das erhaltene Gussbauteil kann daher besonders zuverlässig, insbesondere im Sanitärbereich, eingesetzt werden.

Dadurch, dass die Wandstärke in dem Bereich des Gießkerns im gesamten Bereich des Druckgussbauteils wenigstens genauso groß ist wie die Wandstärke des zu gießenden Grundkörpers selbst, wird eine ausreichende Wärmeaufnahmekapazität während des Gießvorgangs sichergestellt. Des Weiteren ist die Wandstärke so groß, dass die beim Druckgießen auftretenden Drücke kompensiert werden können. Gegebenenfalls kann der Gießkern mit Versteifungsrippen und/oder Stegen versehen sein. Des Weiteren können in dem Kanal auch Stege vorgesehen sein, welche den Kanal durchsetzen. Sofern mehrere Gießkernelemente zum Einsatz kommen, sollten diese ineinander greifen, wobei die entsprechende Übergangsbereiche zwischen den Gießelementen entsprechend abgerundet sein sollten, um die beim Druckgießen auftretenden Spannungen so gering wie möglich zu halten. Dabei können natürlich auch in einem gewissen Maß Bereiche verbleiben, in denen die Wandstärke des Gießkerns noch kleiner als die Wandstärke des Grundkörpers bleibt. Dies ist insbesondere in den Bereichen der Fall, in welchen beim Druckgießen in die Gießform von außen ein Kern eingefahren wird, welcher gegebenenfalls den Gießkern von innen abstützt. Entsprechende Wandbereiche werden also in erster Linie im Bereich der Öffnungen des Grundkörpers vorhanden sein.

In vorteilhafterweise wird für den Gießkern ein Material verwendet, dessen Schmelzpunkt unterhalb des Schmelzpunktes des Materials, d.h. des Metalls oder der Metalllegierung, liegt, aus welchen der Grundkörper hergestellt wird. Zweckmäßigerweise liegt die Schmelztemperatur bzw. der Schmelzpunkt des Gießkernmaterials wenigstens 30°C, vorzugsweise aber wenigstens 50° C und insbesondere wenigstens 100°C unterhalb des Schmelzpunktes des Materials, aus welchem der Grundkörper besteht. Dabei kommen bevorzugt Kunststoffmaterialen, insbesondere faserverstärkte und/oder glasfaserverstärkte Kunststoffe zum Einsatz, denen gegebenenfalls der Keramik-und/oder Glasanteile zugemischt werden können. Diese Materialien bieten den Vorteil, dass der Gießkern leicht herzustellen bzw. zu bearbeiten ist.

Wesentlich hierbei ist, dass beim Druckgießen Metalllegierungen zum Einsatz kommen, deren Schmelzpunkt beispielsweise im Vergleich zu Stahllegierungen relativ niedrig ist, und zudem im Druckgießverfahren hergestellte Bauteile nur eine geringe Wandstärke von wenigen Millimetern besitzen. Beispielsweise kann der Grundkörper aus einer Zinklegierung bestehen, deren Schmelztemperatur üblicherweise im Bereich von 400 bis 420°C liegt. In diesem Fall kann der Grundkörper eine Wandstärke im Bereich von 1,0 bis 3,5 mm, insbesondere im Bereich von 1,5 bis 2,5 mm und vorzugsweise im Bereich von etwa 2 mm aufweisen. Alternativ können Magnesium-Legierungen zum Einsatz kommen, deren Schmelzpunkt bei etwa 620°C und höher liegt. Mit einer solchen Magnesium-Legierung lassen sich Wandstärken im Bereich von 1,0 bis 4,5 mm, insbesondere im Bereich von 2,0 bis 3,0 mm und vorzugsweise im Bereich von etwa 2,5 mm realisieren. Beim Einsatz von Aluminium-Legierungen liegen die Schmelztemperaturen bei 690 °C oder höher. Ein aus einer solchen Aluminium-Legierung bestehenden Grundkörper besitzt eine Wandstärke von 1,0 bis 4,5 mm, insbesondere im Bereich von 2,0 bis 3,0 mm und vorzugsweise im Bereich von 2,5 mm.

Die meisten Kunststoffe besitzen Schmelzpunkte, die unterhalb der angegebenen Temperaturen liegen, so dass eine breite Materialauswahl für den Gießkern zur Verfügung steht.

Der Gießkern kann einteilig ausgebildet sein, so dass er den Grundkörper in denjenigen Abschnitten, für deren Formgebung er beim Gießvorgang verantwortlich ist vollständig ausfüllt. Alternativ ist es auch möglich, mehrere Gießkernelemente zu verwenden, die dann für die Formgebung von jeweils benachbarten Abschnitten des herzustellenden Grundkörpers verantwortlich sind und diese ausfüllen, wobei sie insbesondere jeweils einen Kanalabschnitt des zur Fluidführung dienenden Kanals ausbilden. Dies hat sich insbesondere als zweckmäßig erwiesen, wenn ein Hohlraum mit einer vergleichsweise komplexen Struktur erhalten werden soll. Dann können mehrere weniger komplex geformte Gießkernteile zu einem Gießkern der erwünschten Form zusammengesetzt werden.

Beispielsweise ist es möglich, ein Gießkernelement für den Basisabschnitt einer Wasserauslaufarmatur und ein weiteres Gießkernelement für ein von dem Basisabschnitt abragenden Arm vorzusehen. Wesentlich ist, dass die Gießkernelemente jeweils einteilig ausgebildet sind, d.h. quasi monolithisch aus einem einheitlichen Material ausgebildet sind und damit von innen nach außen nicht aus mehreren Segmenten bestehen, wie dies bei den zusammengesetzten Gießkernen der Fall ist, welche aus der US 2003/0062088 oder der EP 2 033 721 A1 bekannt sind.

Gemäß einer Ausführungsform der vorliegenden Erfindung kann vorgesehen sein, dass durch den Kanal zwei der Öffnungen in dem Grundkörper miteinander verbunden werden. Dies ist insbesondere zweckmäßig, wenn das Gussbauteil als Wasserauslaufarmatur ausgebildet ist. Der Kanal kann dann eine Einlassöffnung in der Wasserauslaufarmatur, an welcher beispielsweise eine Zuführleitung für Wasser angeschlossen ist, mit einer Auslassöffnung, über welche Wasser in ein Waschbecken oder ein Badewanne eingelassen werden kann, verbinden.

In weiterer Ausgestaltung der vorliegenden Erfindung ist vorgesehen, dass ein Gießkern aus einem zur Wasserführung, insbesondere Trinkwasserführung, zugelassenen Material verwendet wird. Insbesondere für den Fall, dass das erfindungsgemäße Gussbauteil zur Trinkwasserführung verwendet wird, muss das Material, aus welchem der Gießkern gefertigt ist, neben der Temperaturstabilität besondere Hygiene- und Sicherheitsanforderungen erfüllen. Diese Anforderungen werden von Materialien erfüllt, die zur Trinkwasserführung zugelassen sind.

Eine weitere Ausführungsform zeichnet sich dadurch aus, dass ein im Gießverfahren hergestellter Gießkern verwendet wird. Dieses Verfahren hat sich als besonders geeignet erwiesen, um Gießkerne der gewünschten bzw. erforderlichen Form zu erhalten. Dabei können im Rahmen des Gießverfahrens insbesondere Gießkerne komplexer Geometrie hergestellt werden. Um einen mehrteiligen Gießkern zu erhalten, werden insbesondere die einzelnen Teile separat, bzw. in separaten Formen gegossen und anschließend zusammengesetzt.

In Weiterbildung der Erfindung wird in dem Gießkern wenigstens eine Befestigungs-Aussparung zur Aufnahme von Befestigungsmitteln, um das Gussbauteil an einem weiteren Bauteil, insbesondere einem Waschtisch oder Waschbecken, anzubringen, insbesondere wenigstens eine Gewindebohrung, vorgesehen. In dieser Ausgestaltung wird der Gießkern nicht nur genutzt, um als Fluidleitungen dienende Kanäle bereitzustellen, sondern der Gießkern ist derart ausgebildet, dass eine Möglichkeit der Befestigung des Gussbauteils an einem weiteren Bauteil gegeben ist. Dazu sind in dem Gießkern eine oder mehrere Befestigungsaussparungen vorgesehen, welche Befestigungsmittel, beispielsweise eine Gewindebuchse aufnehmen können. Alternativ kann das Gewinde auch unmittelbar in den Gießkern eingebracht werden, beispielsweise im Rahmen des Gießvorganges des Gießkerns, oder durch anschließende Bohrung. In die Gewinde kann dann eine Schraube eingebracht werden, über welche die Wasserauslaufarmatur in an sich bekannter Weise an einem Waschbecken fixiert werden kann.

Gemäß einer weiteren Ausführungsform der Erfindung werden in dem Gießkern ein Aufnahmeraum für eine Durchflussregelungs-Vorrichtung und in dem Grundkörper eine Öffnung, durch welche die Durchflussregelungs-Vorrichtung wenigstens teilweise in den Aufnahmeraum eingebracht werden kann, vorgesehen.

Bei dieser Ausführungsform ist der Gießkern derart ausgestaltet, dass eine Durchflussregelungsvorrichtung in diesem platziert werden kann. Zusätzliche Befestigungsmittel zur Fixierung der Durchflussregelungsvorrichtung in dem Grundkörper sind daher nicht erforderlich. Die Fertigstellung des Gussbauteils wird so in erheblichem Maße vereinfacht und die Produktionskosten können reduziert werden.

Dabei ist die Durchflussregelungsvorrichtung zweckmäßigerweise derart ausgebildet und angeordnet, dass sie in den wenigstens einen Kanal zur Fluidführung integriert ist, so dass der Fluidstrom durch diesen über die Durchflussregelungsvorrichtung reguliert werden kann. Ist eine Warm- und eine Kaltwasserleitung vorhanden, so umfasst die Durchflussregelungsvorrichtung vorteilhafter Weise eine Mischkartusche, um durch Mischen eine gewünschte Wassertemperatur einzustellen zu können. Dabei können insbesondere zwei Kanäle, die an ihrem einen Ende jeweils an eine Warm- bzw. Kaltwasser-Zuführleitung angeschlossen sind und deren anderes Ende in die Durchflussregelungsvorrichtung mündet, in dem Gießkern vorgesehen sein. Von der Durchflussregelungsvorrichtung führt dann ein weiterer Kanal, bzw. Kanalabschnitt zu einer Austrittsöffnung des Gussbauteils, so dass Wasser mit einer von einem Benutzer eingestellten Temperatur in ein Waschbecken oder eine Badewanne eingelassen werden kann. Diese Ausgestaltung ist analog zu der aus dem Stand der Technik bekannten Wasserführung in einer Wasserauslaufarmatur mit Mischkartusche, wobei die Wasserleitungen durch die erfindungsgemäß in dem Gießkern vorgesehene Kanäle gebildet werden.

In Weiterbildung der Erfindung werden der wenigstens eine Kanal und/oder wenigstens eine Befestigungs-Aussparung und/oder ein Aufnahmeraum für eine Durchflussregelungs-Vorrichtung vor dem Gießen des Grundkörpers in dem Gießkern vorgesehen. In diesem Fall muss das Bauteil unmittelbar nach dem Gießvorgang zur Herstellung des Grundkörpers ggfs. keiner weiteren Bearbeitung unterzogen werden, bevor es seiner Verwendung zugeführt werden kann, da der Gießkern bereits die zur Fluidführung erforderliche Beschaffenheit aufweist.

Wird auch der Gießkern im Rahmen eines Gießverfahrens hergestellt, so kann insbesondere vorgesehen sein, dass der wenigstens eine Kanal und/oder wenigstens eine Befestigungs-Aussparung und/oder ein Aufnahmeraum für eine Durchflussregelungs- Vorrichtung während des Gießens des Gießkerns in den Gießkern eingebracht werden. Alternativ kann der Gießkern als Vollkörper gegossen werden, wobei der wenigstens eine Kanal und/oder wenigstens eine Befestigungs-Aussparung und/oder ein Aufnahmeraum für eine Durchflussregelungs-Vorrichtung im Anschluss an das Gießen des Gießkerns beispielsweise durch Bohren in den Gießkern eingebracht werden.

Dabei kann insbesondere vorgesehen sein, dass der Gießkern vor oder nach dem Gießen des Grundkörpers nachbearbeitet wird, was insbesondere zweckmäßig ist, wenn der wenigstens eine Kanal und/oder wenigstens eine Befestigungs-Aussparung und/oder ein Aufnahmeraum für eine Durchflussregelungs-Vorrichtung noch nicht die gewünschten Maße aufweisen, oder sich diese während des Gießens verändert haben sollten.

Alternativ können der wenigstens eine Kanal und/oder wenigstens eine Befestigungs-Aussparung und/oder ein Aufnahmeraum für eine Durchflussregelungs-Vorrichtung auch nach dem Gießvorgang des Grundkörpers in dem Gießkern vorgesehen werden. Dann kann z.B. zunächst ein als Vollkörper ausgebildeter Gießkern für die Herstellung des Grundkörpers durch Gießen in dem Gießwerkzeug gehalten werden, und im Anschluss an die Herstellung wird der von dem Grundkörper umgebene Gießkern nachbearbeitet. Dabei können insbesondere durch die Öffnungen in dem Grundkörper durch bohren der Kanal, die Befestigungs-Aussparung und der Aufnahmeraum in dem Gießkern vorgesehen werden, wenn dies zweckdienlich ist.

Hinsichtlich weiterer vorteilhafter Ausgestaltungen und Weiterbildungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt:
- Figur 1: ein als Wasserauslaufarmatur ausgebildetes erfindungsgemäßes Druckgussbauteil in Schnittdarstellung;
- Figur 2: das in Figur 1 dargestellte Druckgussbauteil in einem Druckgießwerkzeug; und
- Figur 3: ein weiteres als Wasserauslaufarmatur erfindungsgemäßes Druckgussbauteil in Schnittdarstellung.

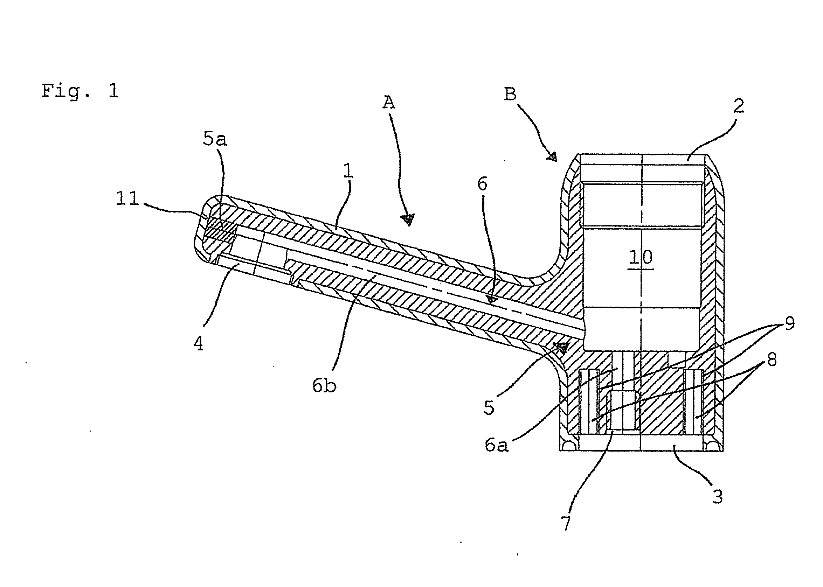

Die Figur 1 zeigt ein erfindungsgemäßes Gussbauteil, welches als Wasserauslaufarmatur ausgebildet ist. Diese umfasst einen im Druckgießverfahren gefertigten Grundkörper, der hier das Gehäuse 1 der Wasserauslaufarmatur bildet und aus einer für das Druckgießen geeigneten Metalllegierung, insbesondere einer Zink-Legierung, einer Aluminium-Legierung oder einer Magnesium-Legierung besteht.

Das Gehäuse 1 der Wasserauslaufarmatur ist hohl ausgebildet und wird durch einen im Wesentlichen zylindrischen Basisabschnitt B und einen von diesem seitlich abragenden Arm A gebildet. Am oberen Ende des zylindrischen Basisabschnitts B ist eine Öffnung 2 für eine nicht eingezeichnete Durchfluss-Regelungsvorrichtung vorgesehen. An seiner Unterseite weist der zylindrische Basisabschnitt B ferner eine Öffnung 3 für die Wasserversorgung und die Befestigung der Wasserauslaufarmatur an einem weiteren Bauteil, insbesondere einem nicht dargestellten Waschbecken, auf. An der Unterseite des abragenden Arms A ist eine Wasseraustrittsöffnung 4 vorgesehen, in deren Bereich sich eine Gewindebohrung erstreckt, in welche ein Strahlformer (Perlator) eingeschraubt werden kann. Durch die drei Öffnungen 2, 3, 4 in dem Gehäuse 1 ist der Innenraum des Gehäuses 1 von außen zugänglich.

Der Innenraum des Gehäuses 1 ist nahezu vollständig mit einem Gießkern 5 gefüllt, der mit der Innenseite des Gehäuses 1 in allen Wandungsabschnitten des Gehäuses 1, für deren Formgebung er beim Druckgießen verantwortlich ist, in flächigem Kontakt steht. Durch den flächigen Kontakt ist gewährleistet, dass der Gießkern 5 sicher in dem Gehäuse 1 sitzt und nicht verrutschen kann. Des Weiteren ist das Gehäuse 1 so gestaltet, dass ein Herausfallen des Gießkerns 5 nicht möglich ist.

In dem Gießkern 5 ist ein als Wasserleitung dienender Kanal 6 vorgesehen, der eine Wassereinlassöffnung 7, die im Bereich der unteren Öffnung 3 des zylindrischen Basisabschnitt B liegt und durch diese zugänglich ist, mit der Wasseraustrittsöffnung 4 verbindet. An die Wassereinlassöffnung 7 kann eine nicht dargestellte Wasserzulaufleitung angeschlossen werden, um die Wasserauslaufarmatur mit Wasser zu speisen. Zu diesem Zweck ist im Bereich der Wassereinlassöffnung 7 eine Gewindebohrung vorgesehen, in welche die Wasserzulaufleitung eingeschraubt werden kann.

Der Gießkern 5 weist ferner zwei Befestigungs-Aussparungen 8 zur Aufnahme von Befestigungsmitteln auf, die hier als Gewindebohrungen 9 ausgebildet sind. Diese sind vorgesehen, um die Wasserauslaufarmatur an einem weiteren Bauteil, beispielsweise einem Waschtisch oder Waschbecken anzubringen, was in der Figur jedoch nicht dargestellt ist.

In dem Gießkern 5 ist ferner ein Aufnahmeraum 10 für eine Durchflussregelungs-Vorrichtung vorgesehen. Der Aufnahmeraum 10 wird durch eine Aussparung in dem Gießkern 5 gebildet, die sich im Wesentlichen im oberen Bereich des zylindrischen Basisabschnitts B des Gießkerns 5 erstreckt. Durch die obere Öffnung 2 kann die Durchfluss-Regelungsvorrichtung wenigstens teilweise in den Aufnahmeraum 10 eingebracht werden.

Der Aufnahmeraum 10 ist hier derart angeordnet, dass er den Kanal 6 unterbricht, so dass sich ein erster Abschnitt 6a des Kanals 6 von der Einlassöffnung 7 bis in den Aufnahmeraum 10 erstreckt und ein zweiter Abschnitt 6b des Kanals 6 von dem Aufnahmeraum 10 zu der Wasseraustrittsöffnung 2 verläuft. Ist die Durchfluss-Regelungsvorrichtung in dem Aufnahmeraum 10 platziert, so kann über diese der Wasserstrom durch den Kanal 6 reguliert werden.

Der Gießkern 5 besteht hier aus einem faserverstärktem Kunststoff und ist im Gießverfahren hergestellt worden. Wahlweise können der Kanal 6, die Befestigungs-Aussparungen 8 und der Aufnahmeraum 10 zumindest teilweise während des Gießens des Gießkerns 5 in diesen eingebracht werden, oder der Gießkern 5 wird als Vollkörper gegossen und der Kanal 6, die Befestigungs-Aussparungen 8 und der Aufnahmeraum 10 werden nach dem Gießen durch bohren in dem Gießkern 5 vorgesehen. Bei dem dargestellten Ausführungsbeispiel ist Letzteres der Fall.

Da der Abschnitt 6b des Kanals 6 von der vorderen Stirnkante 11 des Gießkerns 5 aus zu bohren ist, erstreckt sich der Kanalabschnitt 6b hier bis zu der Stirnseite 11, wo er in eine Öffnung mündet. Diese durch die Bohrung bedingte Öffnung ist mit einem kleinen Teilstück 5b verschlossen, welches zu dem Gießkern 5 gehört. Der Gießkern 5 ist somit zweiteilig ausgebildet.

Wie in der Zeichnung erkennbar ist, ist die Wandstärke des Gießkerns nahezu in allen Bereichen größer als die Wandstärke des Grundkörpers 1, die etwa 2 mm beträgt. Lediglich am oberen Endbereich des Basiskörpers B, wo der Gießkern 5 spitz zuläuft, ist eine Ausnahme gegeben. Im Bereich des Arms A ist die Wandstärke des Gießkerns 5 mehr als doppelt so dick wie die Wandstärke des Grundkörpers 1, im Bereich des Basiskörpers liegen die Wandstärkenverhältnisse zwischen 1,5 am oberen Endbereich des Basiskörpers B und sogar 6 im unteren Endbereich.

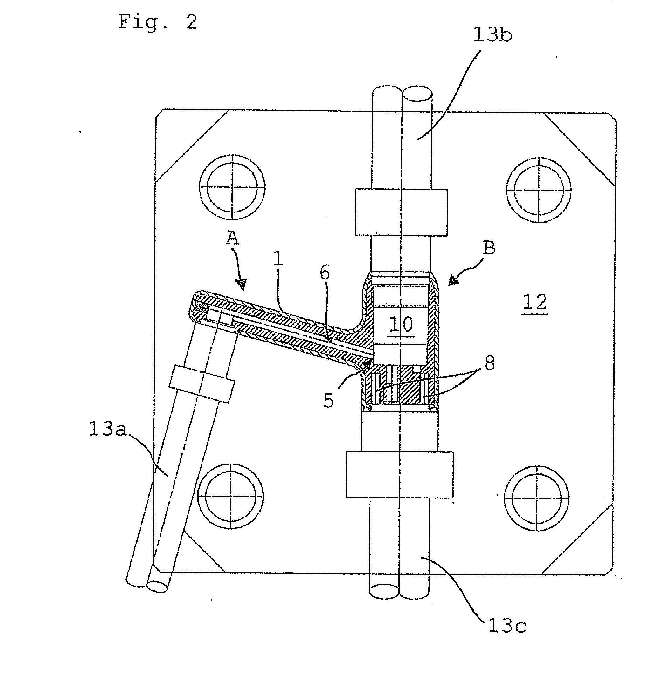

Zur Herstellung der erfindungsgemäßen Wasserauslaufarmatur wird zunächst ein hier zweiteilig ausgebildetes Druckgießwerkzeug 12 bereitgestellt, wie es in Figur 2 dargestellt ist. In dem Druckgießwerkzeug 12 ist der Gießkern 5 über insgesamt drei Stempel 13a, 13b, 13c gehalten. Durch die Stempel 13a, 13b, 13c werden sämtliche Öffnungen in dem Gießkern 5 verschlossen, so dass im Rahmen des Druckgießvorganges kein Material in den Kanal 6, die Befestigungs-Aussparungen 8 oder den Aufnahmeraum 10 gelangen kann. Zwischen dem Gießkern 5 und dem Druckgießwerkzeug 12 erstreckt sich ein freier Raum, durch den die Form des im Druckgießverfahren herzustellenden Gehäuses 1 der Wasserauslaufarmatur definiert wird.

In das Druckgießwerkzeug 12 wird unter hohem Druck flüssiges Metall, hier Zink, eingedrückt, so dass der zwischen dem Gießkern 5 und dem Druckgießwerkzeug 12 liegende Raum ausgefüllt wird. In dem Druckgießwerkzeug sind zu diesem Zweck mehrere nicht eingezeichnete Verteilungs-Kanäle vorgesehen, über die das flüssige Metall in den sich zwischen dem Gießkern 5 und dem Druckgießwerkzeug 12 erstreckenden freien Raum gelangen kann. Nach einer zur Abkühlung und Aushärtung des Metalls erforderlichen Zeitspanne wird das Druckgießwerkzeug 12 von dem hergestellten Gehäuse 1 entfernt, so dass die in Figur 1 dargestellte erfindungsgemäße Wasserauslaufarmatur erhalten wird.

Der Gießkern 5, insbesondere der in diesem vorgesehene Kanal 6, die Befestigungs-Aussparungen 8 und der Aufnahmeraum 10 können im Anschluss bei Bedarf nachbearbeitet werden, oder die Wasserauslaufarmatur wird unmittelbar an einem weiteren Bauteil, beispielsweise an einem Waschbecken, montiert und verwendet.

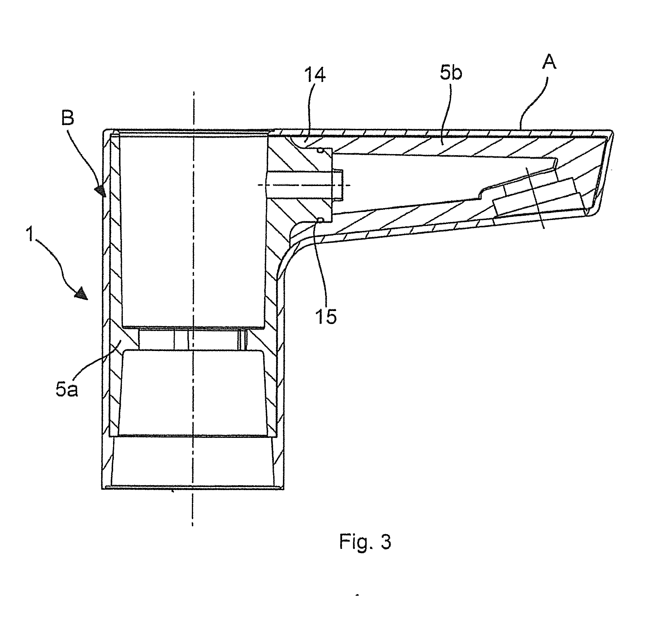

In der Figur 3 ist eine weitere Ausführungsform einer erfindungsgemäßen Wasserauslaufarmatur dargestellt. Wie in dieser Figur gut erkennbar ist, besteht der Gießkern 5 hier aus zwei Gießkernelementen 5a, 5b, wobei das eine Gießkernelement 5a dem Basiskörper B zugeordnet und beim Gießvorgang im Wesentlichen für dessen Formgebung verantwortlich ist, während das andere Gießkernelement 5b den Arm A ausfüllt und für dessen Formgebung beim Druckgießen verantwortlich ist. Die beiden Gießkernelemente 5a, 5b greifen am Übergangsbereich zwischen dem Arm A und dem Basiskörper B ineinander, wozu in dem Gießkernelement 5b, welches den Arm A ausfüllt, eine runde Aufnahme 14 und an dem anderen Gießkernelement 5a eine in die Aufnahme 14 eingreifenden Fortsatz 15 ausgebildet sind. Gut erkennbar ist, dass der die Aufnahme definierende Wandungsabschnitt an seiner Stirnseite stark abgerundet ist und die damit in Kontakt kommenden Bereiche entsprechend konturiert sind, so dass weiche Übergänge gebildet werden, um beim Druckgießen Spannungsspitzen zu vermeiden.

## Patentansprüche

1. Druckgussbauteil, insbesondere Wasserauslaufarmatur, umfassend einen im Druckgießverfahren aus Metall oder einer Metalllegierung hergestellten Grundkörper (1) mit einem Hohlraum, in dem mehrere Öffnungen (2, 3, 4) vorgesehen sind, durch welche der Hohlraum von außen zugänglich ist, wobei der Hohlraum zumindest teilweise mit einem Gießkern (5) gefüllt ist, der mit der Innenseite des Grundkörpers (1) in flächigem Kontakt steht und in dem wenigstens ein Kanal (6) zur Fluidführung vorgesehen ist, **dadurch gekennzeichnet, dass** in einem überwiegenden Teil der Kontaktfläche, insbesondere in dem gesamten oder nahezu dem gesamten Kontaktflächenbereich zwischen dem Gießkern (5) und dem Grundkörper (1) die Wandstärke des Gießkerns (5) gleich groß oder größer ist als die Wandstärke des Grundkörpers (1).

2. Druckgussbauteil nach Anspruch 1, **dadurch gekennzeichnet, dass** der Gießkern (5) einteilig ausgebildet ist oder dass der Gießkern (5) unterteilt ist in mehrere hintereinander liegende und insbesondere jeweils einen Kanalabschnitt (6a, 6b) definierende Gießkernelemente (5a, 5b), wobei die Gießkernelemente (5a, 5b) jeweils einteilig ausgebildet sind.

3. Druckgussbauteil nach einem der vorherigen Ansprüche, **dadurch gekennzeichnet, dass** der Grundkörper (1) aus einer Zink-Legierung besteht und eine Wandstärke im Bereich von 1,0 bis 3,5 mm, insbesondere im Bereich von 1,5 bis 2,5 mm und vorzugsweise im Bereich von etwa 2 mm aufweist oder dass der Grundkörper (1) aus einer Magnesium-Legierung besteht und eine Wandstärke im Bereich von 1,0 bis 4,5 mm, insbesondere im Bereich von 2,0 bis 3,0 mm und vorzugsweise im Bereich von etwa 2,5 mm aufweist dass der Grundkörper (1) aus einer Aluminium-Legierung besteht und eine Wandstärke im Bereich von 1,0 bis 4,5 mm, insbesondere im Bereich von 2,0 bis 3,0 mm und vorzugsweise im Bereich von 2,5 mm aufweist.

4. Druckgussbauteil nach einem der vorherigen Ansprüche, **dadurch gekennzeichnet, dass** die Wandstärke des Gießkerns (5) wenigstens 1,3-mal, insbesondere wenigstens 1,5-mal so groß wie der Wandstärke des Grundkörpers (1) ist.

5. Druckgussbauteil nach einem der vorherigen Ansprüche, **dadurch gekennzeichnet, dass** der Gießkern (5) mit Versteifungsrippen und/oder Stegen versehen ist, wobei insbesondere in dem Kanal (6) Stege vorgesehen sind, welche den Kanal durchsetzen.

6. Druckgussbauteil nach einem der vorherigen Ansprüche, **dadurch gekennzeichnet, dass** der Gießkern (5) aus einem Material besteht, dessen Schmelzpunkt unterhalb des Schmelzpunktes des Materials liegt, aus welchem der Grundkörper (1) hergestellt ist, und dass die Außenseite des Gießkerns (5) zumindest im Wesentlichen vollflächig an der Innenseite des Grundkörpers (1) anliegt.

7. Druckgussbauteil nach einem der vorhergehenden Ansprüche, **dadurch gekennzeichnet, dass** der Gießkern (5) zumindest im Wesentlichen aus einem Kunststoffmaterial, insbesondere einem faserverstärkten und/oder glasfaserverstärkten Kunststoff besteht, wobei insbesondere dem Kunststoffmaterial des Gießkerns (5) Keramik- und/oder Glasanteile zugemischt sind.

8. Gussbauteil nach einem der vorhergehenden Ansprüche, **dadurch gekennzeichnet, dass** in dem Gießkern (5) wenigstens eine Befestigungs-Aussparung (8) zur Aufnahme von Befestigungsmitteln, insbesondere wenigstens eine Gewindebohrung (9), vorgesehen ist, um das Gussbauteil an einem weiteren Bauteil, insbesondere einem Waschtisch oder Waschbecken, anzubringen und/oder dass in dem Gießkern (5) ein Aufnahmeraum (10) für eine Durchflussregelungs-Vorrichtung vorgesehen ist und der Grundkörper (1) eine Öffnung (2) aufweist, durch welche die Durchflussregelungs-Vorrichtung wenigstens teilweise in den Aufnahmeraum (10) eingebracht werden kann.

9. Verfahren zur Herstellung eines Druckgussbauteils, insbesondere einer Wasserauslaufarmatur, umfassend einen Grundkörper (1) mit einem Hohlraum, wobei in dem Grundkörper (1) mehrere Öffnungen (2, 3, 4) vorgesehen sind, durch welche der Hohlraum von außen zugänglich ist, mit den Schritten:
- ein Druckgießwerkzeug (12) mit einem darin gehaltenen Gießkern (5) wird bereitgestellt,
- der Grundkörper (1) wird durch Druckgießen hergestellt, und
- das Druckgießwerkzeug (12) wird von dem Grundkörper (1) entfernt,
wobei der Gießkern (5) in dem Grundkörper (1) verbleibt und in dem Gießkern (5) wenigstens ein Kanal (6) zur Fluidführung vorgesehen wird, **dadurch gekennzeichnet, dass** ein Gießkern (5) verwendet wird, welcher derart ausgebildet ist, dass in einem überwiegenden Teil der Kontaktfläche, insbesondere in dem gesamten oder nahezu den gesamten Kontaktflächenbereich zwischen dem Gießkern (5) und dem Grundkörper (1) die Wandstärke des Gießkerns (5) gleich groß oder größer ist als die Wandstärke des Grundkörpers (1).

10. Verfahren nach Anspruch 9, **dadurch gekennzeichnet, dass** ein einteiliger Gießkern (5) verwendet wird oder dass ein Gießkern (5) verwendet wird, der mehrere hintereinanderliegende und insbesondere jeweils einen Kanalabschnitt (6a, 6b) definierende Gießkernelemente (5a, 5b), wobei die Gießkernelemente (5a, 5b) jeweils einteilig ausgebildet sind.

11. Verfahren nach Anspruch 9 oder 10, **dadurch gekennzeichnet, dass** ein Gießkerns (5) eingesetzt wird, dessen Wandstärke wenigstens 1,3-mal, insbesondere wenigstens 1,5-mal so groß wie der Wandstärke des Grundkörpers (1) ist.

12. Verfahren nach einem der Ansprüche 9 bis 11, **dadurch gekennzeichnet, dass** der Grundkörper (1) aus einer Zink-Legierung mit einer Wandstärke im Bereich von 1,0 bis 3,5 mm, insbesondere im Bereich von 1,5 bis 2,5 mm und vorzugsweise im Bereich von etwa 2 mm hergestellt wird oder der Grundkörper (1) aus einer Magnesium-Legierung mit einer Wandstärke im Bereich von 1,0 bis 4,5 mm, insbesondere im Bereich von 2,0 bis 3,0 mm und vorzugsweise im Bereich von etwa 2,5 mm hergestellt wird, oder dass der Grundkörper (1) aus einer Aluminium-Legierung mit einer Wandstärke im Bereich von 1,0 bis 4,5 mm, insbesondere im Bereich von 2,0 bis 3,0 mm und vorzugsweise im Bereich von 2,5 mm hergestellt wird.

13. Verfahren nach einem der Ansprüche 9 bis 12, **dadurch gekennzeichnet, dass** der Gießkern (5) verwendet wird, der mit Versteifungsrippen und/oder Stegen versehen ist, wobei insbesondere ein Gießkern (5) verwendet wird, in dessen Kanal (6) Stege vorgesehen sind, welche den Kanal durchsetzen.

14. Verfahren nach einem der Ansprüche 9 bis 12, **dadurch gekennzeichnet, dass** ein vorzugsweise im Gießverfahren hergestellter Gießkern (5) verwendet wird, der zumindest im Wesentlichen aus einem Kunststoffmaterial, insbesondere einem faserverstärkten und/oder glasfaserverstärkten Kunststoff besteht, wobei insbesondere dem Kunststoffmaterial des Gießkerns (5) Keramik- und/oder Glasanteile zugemischt werden.

15. Verfahren nach einem der Ansprüche 9 bis 14, **dadurch gekennzeichnet, dass** in dem Gießkern (5) wenigstens eine Befestigungs-Aussparung (8) zur Aufnahme von Befestigungsmitteln, insbesondere wenigstens eine Gewindebohrung (9), vorgesehen wird, um das Gussbauteil an einem weiteren Bauteil, insbesondere einem Waschtisch oder Waschbecken, anzubringen, und/oder dass in dem Gießkern (5) ein Aufnahmeraum (10) für eine Durchflussregelungs-Vorrichtung und in dem Grundkörper (1) eine Öffnung (2), durch welche die Durchflussregelungs-Vorrichtung wenigstens teilweise in den Aufnahmeraum (10) eingebracht werden kann, vorgesehen werden und/oder dass der wenigstens eine Kanal (6) und/oder wenigstens eine Befestigungs-Aussparung (8) und/oder ein Aufnahmeraum (10) für eine Durchflussregelungs-Vorrichtung vor dem Gießen des Grundkörpers (1) in dem Gießkern (5) vorgesehen werden, wobei der wenigstens eine Kanal (6) und/oder wenigstens eine Befestigungs-Aussparung (8) und/oder ein Aufnahmeraum (10) für eine Durchflussregelungs-Vorrichtung insbesondere während der Herstellung, insbesondere des Gießens, des Gießkerns (5), in den Gießkern (5) eingebracht werden.
